# EUROPEAN PATENT APPLICATION

(11) **EP 4 844 009 A1**
(43) Date of publication of application: **25.11.2026**
(21) Application number: 25178324.7
(22) Date of filing: 22.05.2025
(51) Int. Cl.: C08F 214/22, C08K 5/205, C09D 127/16, C09D 127/18, H01M 4/131, H01M 4/1391, H01M 4/485, H01M 4/505, H01M 4/525, H01M 4/62, H01M 10/0525, H01M 10/0565

(54) **FLUOROPOLYMER FOR SECONDARY BATTERIES**

(71) Applicant: ARKEMA INC., King of Prussia PA 19406 (US)
(72) Inventor: FUKUYAMA, Takehiro, Kyoto, 600-8815 (JP); LAI, HIU WOON, King of Prussia, 19406 (US)
(74) Representative: Arkema Patent

(57) **Abstract**

The present invention relates to a composition comprising a fluoropolymer **P1** comprising recurring units derived from vinylidene fluoride wherein said composition further comprises from 0.0001wt% to 5wt% of a component **P2** selected from the group consisting of hydrophobically-modified ethoxylate urethanes (HEUR).

## Description

### Technical field

The present invention relates to a composition suitable for preparing components for use in secondary batteries. In particular, the present invention relates to a composition comprising a fluoropolymer and a polymer additive that can be used in various applications such as binder composition, membrane, coatings or solid electrolyte.

### Background of the invention

Aqueous emulsion polymerization can be used to produce an aqueous latex of fluoropolymers. Generally, fluoropolymers are then separated from the emulsion by addition of a coagulant to form a slurry. The slurry is then washed and dried and then shaped into final form for commercial use.

Coagulants employed are typically salts of inorganic multivalent ions. These include aluminium salts such as aluminium sulfate, alums such as potassium aluminium sulfate, calcium salts such as calcium chloride and calcium nitrate, and magnesium salts such as magnesium chloride and magnesium nitrate. While these salts work well as coagulants residual amounts of these salts remain in the polymer. Indeed, completely removing the salts from the coagulated polymers are very difficult. The presence of these salts might affect their suitability in some applications such as energy storage applications.

Thus, it would be desirable to find other coagulants effective for use in the emulsion polymerization of fluoropolymers. For example, it is known from WO2023210819 a method to coagulate fluoropolymer emulsions by using C₃-C₅ alcohol. It is also known from US7960480 a method to coagulate fluoropolymer emulsion by using an aqueous solution of polyethyleneimine or its copolymers.

There is still a need to find new coagulant for use in an emulsion polymerization process of fluoropolymers. In particular, there is still a need for new coagulant for use in an emulsion polymerization process of fluoropolymers being used as one of the components of energy storage devices such as secondary batteries.

### Summary of the invention

The applicant surprisingly found a process for producing fluoropolymers without the use of inorganic salts as coagulant. The present process allows coagulation of fluoropolymer from emulsions with a metal and inorganic free method at low cost and high efficiency. The fluoropolymers so obtained is useful for applications such as energy storage devices. The applicant surprisingly found that the fluoropolymer obtained is easy to handle, have improved processability, particularly for fluoropolymers comprising high content in comonomers such as hexafluoropropene. The present invention also allows to prepare fluoropolymers without the use of metallic ions that can be contaminants in battery or interfere with crosslinking agents.

In a first aspect, the present invention relates to a composition comprising a fluoropolymer **P1** comprising recurring units derived from a monomer **M1a** selected from the group consisting of vinylidene fluoride or tetrafluoroethylene wherein said composition further comprises from 0.0001wt% to 5wt%, based on the weight of said fluoropolymer **P1** in the composition, of a component **P2** selected from the group consisting of hydrophobically-modified ethoxylate urethanes (HEUR).

In a preferred embodiment, said component **P2** resulting from the condensation:
A) of at least one compound of formula (I) R-[(OE)ₘ-(OP)ₙ-(OB)ₚ]-OH wherein R is a saturated or unsaturated, linear or branched or cyclic or aromatic carbon chain, containing from 5 to 70 carbon atoms; [(OE)ₘ-(OP)ₙ-(OB)ₚ] represents an alkoxyl chain formed from alternating or statistical alkoxyl units, distributed in blocks, chosen from ethoxyl units OE, propoxyl units OP and butoxyl units OB and m, n, p represent, independently of each other, 0 or an integer ranging between 1 and 100, the sum of m, n and p being between 0 and 100,
   or at least one compound of formula (II) R^{a}-OH wherein Ra is a saturated or unsaturated, linear or branched, or cyclic or aromatic carbon chain, containing from 3 to 70 carbon atoms;
B) of at least one polyol, preferably of at least one poly(alkylene glycol) and
C) of at least one polyisocyanate.

In a preferred embodiment, said composition is under powder form or is an aqueous solution.

In a preferred embodiment, said component **P2** has a viscosity ranging from 500 to 30000 mPa.s measured by a Brookfield B-type viscometer at 25°C and 10 rpm.

In a preferred embodiment, said fluoropolymer **P1** is a homopolymer of vinylidene fluoride, a homopolymer of tetrafluoroethylene or a polymer comprising recurring units derived from a monomer **M1a** selected from the group consisting of vinylidene fluoride and tetrafluoroethylene and recurring units derived from at least one fluorinated monomer **M1b;** said at least one fluorinated monomer **M1b** being selected from the group consisting of vinylidene fluoride, hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF₂=CFOCF₂CF(CF₃)OCF₂CF₂X wherein X is SO₂F, CO₂H, CH₂OH, CH₂OCN or CH₂OPO₃H; a monomer of formula CF₂=CFOCF₂CF₂SO₂F; a monomer of formula F(CF₂)nCH₂OCF=CF₂ wherein n is 1, 2, 3, 4 or 5; a monomer of formula R¹CH₂OCF=CF₂ wherein R' is hydrogen atom or F(CF₂)m and m is 1, 2, 3 or 4; a monomer of formula R²OCF=CH₂ wherein R² is F(CF₂)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluoromethyl-3,3,3-trifluoro-1-propene or mixture thereof; said monomer **M1b** being different from monomer **M1a.**

In a preferred embodiment, said fluoropolymer **P1** is a copolymer comprising recurring units derived from a monomer **M1a** being vinylidene fluoride and from 1wt% to 40wt% of recurring units derived from at least one fluorinated monomer **M1b** as defined in the present invention based on the total weight of said fluoropolymer **P1,** preferably said at least one fluorinated monomer **M1b** is hexafluoropropene.

In another aspect, the present invention relates to a binder composition comprising the composition according to the present invention.

In another aspect, the present invention relates to an electrode-forming composition for use in the preparation of electrodes for electrochemical devices comprising at least one electrode active material, a binder composition according to the present invention, and optionally at least one conductive agent.

In a preferred embodiment, said electrode active material is selected from the group consisting of LiCoO₂, Li(Ni, Co, Al)O₂, Li₍₁₊ₓ₎NiₐMn_{b}Co_{c} (x represents a real number of 0 or more, a = 0.9, 0.8, 0.6, 0.5, or 1/3, b = 0.05, 0.1, 0.2, 0.3, or 1/3, c = 0.05, 0.1, 0.2, or 1/3), LiNiO₂, LiMn₂O₄, LiCoMnO₄, Li₃NiMn₃O₃, Li₃Fe₂(PO₄)₃, Li₃V₂(PO₄)₃, a spinel Li Mn substituted by a different element having a composition represented by Li₁₊ₓMn_{2-x-y}M_{y}O₄, M representing at least one metal chosen from Al, Mg, Co, Fe, Ni, and Zn, x and y independently representing a real number between 0 and 2, lithium titanate LiₓTiO_{y} -x and y independently representing a real number between 0 and 2, and a lithium metal phosphate having a composition represented by LiMPO₄, with M representing Fe, Mn, Co, or Ni.

In a preferred embodiment, said electrode active material is selected from the group consisting of lithium alloy, lithium metal, a metal oxide, a carbon material such as graphite or hard carbon, silicon and its derivatives SiOx, silicone, graphite-silicon composite, a silicon alloy and Li₄Ti₅O₁₂ or a mixture thereof.

In another aspect, the present invention relates to an electrode for electrochemical devices comprising at least one electrode active material, a binder composition according to the present invention, and optionally at least one conductive agent.

In another aspect, the present invention relates to a secondary battery comprising an electrode according to the present invention.

In another aspect, the present invention relates to a solid electrolyte comprising the binder composition according to the present invention and a lithium salt and/or sulfide-based inorganic particles.

In another aspect, the present invention relates to a solid-state battery comprising a solid electrolyte according to the previous claim and/or an electrode according to the present invention.

In another aspect, the present invention relates to the use, of a component **P2** selected from the group consisting of hydrophobically-modified ethoxylate urethanes (HEUR).

In another aspect, the present invention relates to a process for preparing a fluoropolymer by emulsion comprising the steps of:
i) Polymerizing a monomer **M1a** selected from the group consisting of vinylidene fluoride or tetrafluoroethylene, optionally in mixture with at least one fluorinated monomer **M1b** selected from the group consisting of vinylidene fluoride, hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF₂=CFOCF₂CF(CF₃)OCF₂CF₂X wherein X is SO₂F, CO₂H, CH₂OH, CH₂OCN or CH₂OPO₃H; a monomer of formula CF₂=CFOCF₂CF₂SO₂F; a monomer of formula F(CF₂)nCH₂OCF=CF₂ wherein n is 1, 2, 3, 4 or 5; a monomer of formula R¹CH₂OCF=CF₂ wherein R' is hydrogen atom or F(CF₂)m and m is 1, 2, 3 or 4; a monomer of formula R²OCF=CH₂ wherein R² is F(CF₂)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluoromethyl-3,3,3-trifluoro-1-propene or mixture thereof, said monomer **M1b** being different from monomer **M1a,** in an aqueous medium to obtain a polymerization emulsion comprising said fluoropolymer **P1;**
ii) Bringing said fluoropolymer **P1** in the polymerization emulsion into contact with of a component **P2** selected from the group consisting of hydrophobically-modified ethoxylate urethanes (HEUR).

In another aspect, the present invention relates to a process for preparing a fluoropolymer comprising the steps of:
i) Polymerizing a fluoromonomer, preferably a monomer **M1a** selected from the group consisting of vinylidene fluoride or tetrafluoroethylene and optionally in mixture with at least one fluorinated monomer **M1b** selected from the group consisting of hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF₂=CFOCF₂CF(CF₃)OCF₂CF₂X wherein X is SO₂F, CO₂H, CH₂OH, CH₂OCN or CH₂OPO₃H; a monomer of formula CF₂=CFOCF₂CF₂SO₂F; a monomer of formula F(CF₂)nCH₂OCF=CF₂ wherein n is 1, 2, 3, 4 or 5; a monomer of formula R¹CH₂OCF=CF₂ wherein R' is hydrogen atom or F(CF₂)m and m is 1, 2, 3 or 4; a monomer of formula R²OCF=CH₂ wherein R² is F(CF₂)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluorométhyl-3,3,3-trifluoro-1-propene or mixture thereof, in an aqueous medium to obtain a polymerization emulsion comprising a fluoropolymer, and
ii) Bringing the fluoropolymer in the polymerization emulsion into contact with of a component **P2** selected from the group consisting of hydrophobically-modified ethoxylate urethanes (HEUR).

In another aspect, the present invention provides the use of the composition according to the present invention in the preparation of a conductive polymer, solid electrolytes, electrodes, separator for electrochemical devices, paints, cables, wires, anti-corrosion equipment for the chemical industry, coatings for construction or architecture.

### Detailed description of the invention

In a first aspect, as mentioned above, the present invention relates to a composition comprising a fluoropolymer **P1** and a component **P2** as defined hereunder. The present composition is suitable for various applications, particularly for energy storage applications such as secondary batteries. Said composition comprises from 0.0001wt% to 5wt% of said component **P2,** preferably from 0.001wt% to 4wt%, more preferably from 0.01wt% to 3wt%, particularly from 0.01wt% to 2wt%, more particularly from 0.01wt% to 1wt% of said component **P2** based on the weight of said fluoropolymer **P1** in the composition. The applicant has surprisingly found that a component **P2** selected from HEUR can improve the coagulation of a fluoropolymer. The fluoropolymer so obtained can be easily handled to prepare binder composition suitable for energy storage devices.

The composition can be in a powder form or in a latex form. Hence, in a preferred embodiment, the present invention relates to a powder composition comprising a fluoropolymer **P1** and a component **P2** as defined hereunder and in the amount detailed above. Preferably said powder composition comprises at least 95wt% of said fluoropolymer **P1** based on the total weight of the composition and from 0.0001wt% to 5wt% of said component **P2,** preferably from 0.001wt% to 4wt%, more preferably from 0.01wt% to 3wt%, particularly from 0.01wt% to 2wt%, more particularly from 0.01wt% to 1wt% of said component **P2** based on the weight of said fluoropolymer **P1** in the powder composition.

In another embodiment, the present invention relates to a latex composition comprising a fluoropolymer **P1** and a component **P2** as defined hereunder. Preferably said latex composition comprises at least 95wt% of said fluoropolymer **P1** based on the weight of the components constituting the composition except water; and from 0.0001wt% to 5wt% of said component **P2,** preferably from 0.001wt% to 4wt%, more preferably from 0.01wt% to 3wt%, particularly from 0.01wt% to 2wt%, more particularly from 0.01wt% to 1wt% of said component **P2** based on the weight of said fluoropolymer **P1** in the latex composition.

The content of component **P2** can be determined by various analytical techniques known in the art such as FTIR spectroscopy and ¹H NMR.

### Fluoropolymer P1

The fluoropolymer used in the present invention is a vinylic component bearing at least one fluorine atom. The fluoropolymer **P1** may comprise recurring units derived from a monomer **M1a** selected from the group consisting of vinylidene fluoride or tetrafluoroethylene. Preferably, the fluoropolymer **P1** may be a homopolymer of vinylidene fluoride, a homopolymer of tetrafluoroethylene or a polymer comprising recurring units derived from a monomer **M1a** selected from the group consisting of vinylidene fluoride and tetrafluoroethylene and recurring units derived from at least one fluorinated monomer **M1b.** The comonomers that is compatible and copolymerized with vinylidene fluoride or tetrafluoroethylene can be halogenated (fluorinated, chlorinated or brominated) or non-halogenated.

Preferably, said fluorinated monomer **M1b** may be selected from the group consisting of vinylidene fluoride, hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF₂=CFOCF₂CF(CF₃)OCF₂CF₂X wherein X is SO₂F, CO₂H, CH₂OH, CH₂OCN or CH₂OPO₃H; a monomer of formula CF₂=CFOCF₂CF₂SO₂F; a monomer of formula F(CF₂)nCH₂OCF=CF₂ wherein n is 1, 2, 3, 4 or 5; a monomer of formula R¹CH₂OCF=CF₂ wherein R' is hydrogen atom or F(CF₂)m and m is 1, 2, 3 or 4; a monomer of formula R²OCF=CH₂ wherein R² is F(CF₂)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluorométhyl-3,3,3-trifluoro-1-propene or mixture thereof; said monomer **M1b** being different from monomer **M1a.**

Examples of trifluoropropenes is in particular 3,3,3-trifluoropropene. Tetrafluoropropenes may be for example 2,3,3,3-tetrafluoropropene or 1,3,3,3-tetrafluoropropene. Pentafluoropropenes may be for example 1,1,3,3,3-pentafluoropropene or 1,2,3,3,3-pentafluoropropene. Perfluoroalkyl vinyl ethers are for example those of general formula Rf-O-CF=CF₂, Rf being an alkyl group, preferably a C, to C₄ alkyl group (preferred examples being perfluoropropyl vinyl ether and perfluoromethyl vinyl ether). Chlorofluoroethylene can denote either 1-chloro-1-fluoroethylene or 1-chloro-2-fluoroethylene. The 1-chloro-1-fluoroethylene isomer is preferred. Chlorotrifluoropropene is preferably 1-chloro-3,3,3-trifluoropropene or 2-chloro-3,3,3-trifluoropropene.

Said fluorinated monomer **M1b** may be selected from the group consisting of vinylidene fluoride, vinyl fluoride, trifluoroethylene, chlorotrifluoroethylene, 1,2-difluoroethylene, tetrafluoroethylene, hexafluoropropylene, perfluoro(alkyl vinyl) ethers such as perfluoro(methyl vinyl)ether (PMVE), perfluoro(ethylvinyl) ether and perfluoro(propyl vinyl) ether, perfluorobutylethylene, 3,3,3-trifluoropropene, tetrafluoropropene, hexafluoroisobutylene, perfluorobutylethylene, pentafluoropropene, bromotrifluoroethylene, chlorofluoroethylene, chlorotrifluoroethylene, chlorotrifluoropropene, ethylene and 2-trifluoromethyl-3,3,3-trifluoro-1-propene or mixtures thereof.

Said fluorinated monomer **M1b** may be selected from the group consisting of vinylidene fluoride, vinyl fluoride, tetrafluoroethylene, hexafluoropropylene, 3,3,3-trifluoropropene, 2,3,3,3-tetrafluoropropene, 1,3,3,3-tetrafluoropropene, hexafluoroisobutylene, perfluorobutylethylene, 1,1,3,3,3-pentafluoropropene, 1,2,3,3,3-pentafluoropropene, perfluoro(propylvinyl ether), perfluoro(methyl vinyl ether), perfluoro(ethylvinyl ether), trifluoroéthylène, bromotrifluoroethylene, chlorofluoroethylene, chlorotrifluoroethylene, chlorotrifluoropropene, ethylene and mixtures thereof.

Said fluorinated monomer **M1b** may be selected from the group consisting of vinylidene fluoride, tetrafluoroethylene, hexafluoropropylene, perfluoro(propylvinyl ether), perfluoro(methyl vinyl ether), perfluoro(ethylvinyl ether), trifluoroethylene, chlorofluoroethylene, chlorotrifluoroethylene and mixtures thereof.

Preferably, when said monomer **M1a** is vinylidene fluoride, said fluorinated monomer **M1b** may be selected from the group consisting of tetrafluoroethylene, hexafluoropropylene, perfluoro(propylvinyl ether), perfluoro(methyl vinyl ether), perfluoro(ethylvinyl ether), trifluoroethylene, chlorofluoroethylene, chlorotrifluoroethylene and mixtures thereof, particularly said fluorinated monomer **M1b** may be selected from the group consisting of tetrafluoroethylene, hexafluoropropylene, trifluoroethylene, chlorofluoroethylene, chlorotrifluoroethylene and mixtures thereof.

Preferably, when said monomer **M1a** is tetrafluoroethylene, said fluorinated monomer **M1b** may be selected from the group consisting of vinylidene fluoride, hexafluoropropylene, perfluoro(propylvinyl ether), perfluoro(methyl vinyl ether), perfluoro(ethylvinyl ether), trifluoroethylene, chlorofluoroethylene, chlorotrifluoroethylene and mixtures thereof.

Said fluoropolymer **P1** may contain at least 50 wt% of said monomer **M1a,** advantageously at least 55wt% of said monomer **M1a,** preferably at least 60wt% of said monomer **M1a,** more preferably at least 65wt% of said monomer **M1a,** in particular at least 70wt% of said monomer **M1a** based on the total weight of the fluoropolymer **P1.** Preferably, said fluoropolymer **P1** may contain less than 50 wt% of said fluorinated monomer **M1b,** advantageously less than 45 wt% of said fluorinated monomer **M1b,** preferably less than 40 wt% of said fluorinated monomer **M1b,** more preferably less than 35 wt% of said fluorinated monomer **M1b** based on the total weight of the fluoropolymer **P1.** Preferably, said fluoropolymer **P1** has a weight content in said fluorinated monomer **M1b** greater than 1 wt%, preferably greater than 5wt%, more preferably greater than 10wt%, in particular greater than 15 wt% based on the total weight of the fluoropolymer **P1.**

Preferably, said fluoropolymer **P1** contains from 60 wt% to 90 wt% of vinylidene fluoride and from 10 wt% to 40wt% of said fluorinated monomer **M1b** based on the total weight of the fluoropolymer **P1.**

In a more specific embodiment, said polymer **P1** comprises recurring units derived from vinylidene fluoride and recurring units derived from hexafluoropropylene. Preferably, said fluoropolymer **P1** may contain less than 50 wt% of hexafluoropropylene, advantageously less than 45 wt% of hexafluoropropylene, preferably less than 40 wt% of hexafluoropropylene, more preferably less than 35 wt% of hexafluoropropylene based on the total weight of the fluoropolymer **P1.** Preferably, said fluoropolymer **P1** has a weight content in hexafluoropropylene greater than 1 wt%, preferably greater than 5wt%, more preferably greater than 10wt%, in particular greater than 15 wt%, more particularly greater than 20wt%, most particularly greater than 25wt% based on the total weight of the fluoropolymer **P1.** In a particular embodiment, said fluoropolymer **P1** is a copolymer of vinylidene fluoride and hexafluoropropylene, wherein said fluoropolymer **P1** contain at least 50 wt% of vinylidene fluoride, advantageously at least 55 wt% of vinylidene fluoride, preferably at least 60 wt% of vinylidene fluoride, more preferably at least 65 wt% of vinylidene fluoride, in particular from 60 to 90 wt% of vinylidene fluoride, more particularly from 60 to 85wt%, most particularly from 65 to 80 wt%; and less than 50 wt% of hexafluoropropylene, advantageously less than 45 wt% of hexafluoropropylene, preferably less than 40 wt% of hexafluoropropylene, more preferably less than 35 wt% of hexafluoropropylene. Particularly, said fluoropolymer **P1** may contain from 1 to 40 wt% of hexafluoropropylene, more particularly from 5 to 40 wt%, most particularly from 10% to 35wt% based on the total weight of the fluoropolymer **P1.** Particularly, said fluoropolymer **P1** may contain from 60 to 99 wt% of vinylidene fluoride and from 1 to 40 wt% of hexafluoropropylene, advantageously from 65 to 35wt% of vinylidene fluoride and from 5 to 35wt% of hexafluoropropene based on the total weight of the fluoropolymer **P1.**

Alternatively, said fluoropolymer **P1** comprises recurring units derived from vinylidene fluoride and recurring units derived from tetrafluoroethylene. Preferably, when said fluoropolymer **P1** comprises recurring units derived from vinylidene fluoride and recurring units derived from tetrafluoroethylene, it may contain less than 40 mol%, advantageously less than 30 mol%, preferably less than 20 mol%, more preferably less than 10 mol%, in particular less than 5 mol% of recurring units derived from tetrafluoroethylene; and at least 60 mol%, advantageously at least 70 mol%, preferably at least 80 mol%, more preferably at least 90 mol%, particularly at least 95 mol% of recurring units derived from vinylidene fluoride. Alternatively, when said fluoropolymer **P1** comprises recurring units derived from vinylidene fluoride and recurring units derived from tetrafluoroethylene, it may contain less than 60 mol%, advantageously less than 50 mol%, preferably less than 40 mol%, more preferably less than 30 mol%, particularly less than 20 mol% of recurring units derived from vinylidene fluoride; and at least 40 mol%, advantageously at least 50 mol%, preferably at least 60 mol%, more preferably at least 70 mol%, particularly at least 80 mol% of recurring units derived from tetrafluoroethylene.

In another embodiment, said fluoropolymer **P1** is a copolymer of vinylidene fluoride and chlorotrifluoroethylene. Preferably, said fluoropolymer **P1** may contain less than 25 mol% of chlorotrifluoroethylene, advantageously less than 20 mol% of chlorotrifluoroethylene, preferably less than 15 mol% of chlorotrifluoroethylene, more preferably less than 10 mol% of chlorotrifluoroethylene, particularly less than 5 mol% of chlorotrifluoroethylene; and greater than 0,5 mol% of chlorotrifluoroethylene, preferably greater than 1 mol% of chlorotrifluoroethylene.

Alternatively, said fluoropolymer **P1** may be a copolymer of vinylidene fluoride and trifluoroethylene, a copolymer of vinylidene fluoride and tetrafluoroethylene, a copolymer of vinylidene fluoride and chlorotrifluoroethylene, a terpolymer of vinylidene fluoride, chlorotrifluoroethylene and tetrafluoroethylene, a terpolymer of vinylidene fluoride, chlorotrifluoroethylene and trifluoroethylene, a terpolymer of vinylidene fluoride, trifluoroethylene and hexafluoropropene, a terpolymer of vinylidene fluoride, tetrafluoroethylene and 1,1-chlorofluoroethylene, a terpolymer of vinylidene fluoride, trifluoroethylene and 1,1-chlorofluoroethylene and a terpolymer of vinylidene fluoride, hexafluoropropene and tetrafluoroethylene.

In the fluoropolymer **P1** according to the present invention, the molar content of trifluoroethylene can be at least 1 mol%, advantageously at least 5 mol%, preferably at least 7 mol%, more preferably at least 10 mol%, in particular at least 12 mol%, especially at least 15 mol%. Preferably, the molar content of trifluoroethylene can be between 15 and 50%, advantageously between 17 and 45 mol%, preferably between 20 and 40 mol%, especially between 20 and 35 mol%, especially between 20 and 30 mol%.

In the fluoropolymer **P1** according to the present invention, the molar content of chlorotrifluoroethylene can be at least 0.5 mol%, advantageously at least 1 mol%, preferably at least 2 mol%, more preferably at least 3 mol%, in particular at least 4 mol%, more particularly at least 5 mol%. Preferably, the molar content of chlorotrifluoroethylene can be between 1 and 20%, advantageously between 2 and 17 mol%, preferably between 3 and 15 mol%, especially between 4 and 15 mol%, especially between 5 and 12 mol%.

In the fluoropolymer **P1** according to the present invention, the molar content of tetrafluoroethylene can be at least 1 mol%, advantageously at least 5 mol%, preferably at least 7 mol%, more preferably at least 10 mol%, in particular at least 15 mol%, especially at least 20 mol%. Preferably, the molar content of tetrafluoroethylene can be between 1 and 60%, advantageously between 2 and 55 mol, preferably between 5 and 50 mol%, especially between 7 and 45 mol%, especially between 10 and 40 mol%.

In the fluoropolymer **P1** according to the present invention, the molar content of 1,1-chlorofluoroethylene may be at least 0.5 mol%, advantageously at least 1 mol%, preferably at least 2 mol%, more preferably at least 3 mol%, in particular at least 4 mol%, more particularly at least 5 mol%. Preferably, the molar content of 1,1-chlorofluoroethylene can be between 1 and 20%, advantageously between 2 and 17 mol%, preferably between 3 and 15 mol%, especially between 4 and 15 mol%, especially between 5 and 12 mol%.

In a copolymer of vinylidene fluoride and trifluoroethylene, the molar content of vinylidene fluoride can be between 60 and 99 mol%, advantageously between 65 and 95 mol%, preferably between 65 and 90 mol%, more preferentially between 68 and 85 mol%, in particular between 70 and 82 mol%, more particularly between 73 and 82 mol%; and the molar content of trifluoroethylene can be between 1 and 40 mol%, advantageously between 5 and 35 mol%, preferably between 10 and 35 mol%, more preferably between 15 and 32 mol%, especially between 18 and 30 mol%, more particularly between 18 and 27 mol%. In the most preferred proportions, the copolymer has ferroelectric and ferroelectric relaxer properties.

In a copolymer of vinylidene fluoride and tetrafluoroethylene, the molar content of vinylidene fluoride can be between 40 and 99 mol%, advantageously between 45 and 95 mol%, preferably between 50 and 90 mol%, more preferably between 55 and 85 mol%; and the molar content of tetrafluoroethylene can be between 1 and 60 mol%, advantageously between 5 and 55 mol, preferably between 10 and 50 mol%, more preferably between 15 and 45 mol%.

In a copolymer of vinylidene fluoride and chlorotrifluoroethylene, the molar content of vinylidene fluoride can be between 60 and 99 mol%, advantageously between 65 and 98 mol%, preferably between 65 and 97 mol%, more preferentially between 70 and 96 mol%, in particular between 75 and 95 mol%; and the molar content of trifluoroethylene can be between 1 and 40 mol%, advantageously between 2 and 35 mol%, preferably between 3 and 35 mol%, more preferentially between 4 and 30 mol%, especially between 5 and 25 mol%.

In a terpolymer of vinylidene fluoride, chlorotrifluoroethylene and tetrafluoroethylene, the molar content of vinylidene fluoride can be between 20 and 98 mol%, advantageously between 35 and 90 mol%, preferably between 50 and 90 mol%; and the molar content of tetrafluoroethylene can be between 1 and 50 mol%, advantageously between 5 and 50 mol%, preferably between 5 and 40 mol%; and the molar content of chlorotrifluoroethylene can be between 1 and 30 mol%, advantageously between 1 and 15 mol%, preferably between 1 and 12 mol%.

In a terpolymer of vinylidene fluoride, chlorotrifluoroethylene and trifluoroethylene, the molar content of vinylidene fluoride can be between 20 and 98 mol%, advantageously between 35 and 90 mol%, preferably between 50 and 90 mol%; and the molar content of trifluoroethylene can be between 1 and 50 mol%, advantageously between 5 and 50 mol%, preferably between 5 and 40 mol%; and the molar content of chlorotrifluoroethylene can be between 1 and 30 mol%, advantageously between 2 and 15 mol%, preferably between 4 and 12 mol%. In the most preferred proportions, the copolymer has ferroelectric and ferroelectric relaxer properties.

In a terpolymer of vinylidene fluoride, trifluoroethylene and hexafluoropropene, the molar content of vinylidene fluoride can be between 20 and 98 mol%, advantageously between 35 and 90 mol%, preferably between 50 and 90 mol%; and the molar content of trifluoroethylene can be between 1 and 50 mol%, advantageously between 5 and 50 mol%, preferably between 5 and 40 mol%; and the molar content of hexafluoropropene can be between 1 and 30 mol%, advantageously between 1 and 15 mol%, preferably between 1 and 12 mol%.

In a terpolymer of vinylidene fluoride, tetrafluoroethylene and 1,1-chlorofluoroethylene, the molar content of vinylidene fluoride can be between 20 and 98 mol%, advantageously between 35 and 90 mol%, preferably between 50 and 90 mol%; and the molar content of tetrafluoroethylene can be between 1 and 50 mol%, advantageously between 5 and 50 mol%, preferably between 5 and 40 mol%; and the molar content of 1,1-chlorofluoroethylene can be between 1 and 30 mol%, advantageously between 1 and 15 mol%, preferably between 1 and 12 mol%.

In a terpolymer of vinylidene fluoride, trifluoroethylene and 1,1-chlorofluoroethylene, the molar content of vinylidene fluoride can be between 20 and 98 mol%, advantageously between 35 and 90 mol%, preferably between 50 and 90 mol%; and the molar content of trifluoroethylene can be between 1 and 50 mol%, advantageously between 5 and 50 mol%, preferably between 5 and 40 mol%; and the molar content of 1,1-chlorofluoroethylene can be between 1 and 30 mol%, advantageously between 2 and 15 mol%, preferably between 4 and 12 mol%.

In a terpolymer of vinylidene fluoride, hexafluoropropene and tetrafluoroethylene, the molar content of vinylidene fluoride can be between 20 and 98 mol%, advantageously between 35 and 90 mol%, preferably between 50 and 90 mol%; and the molar content of tetrafluoroethylene can be between 1 and 50 mol%, advantageously between 5 and 50 mol%, preferably between 5 and 40 mol%; and the molar content of hexafluoropropene can be between 1 and 50 mol%, advantageously between 1 and 15 mol%, preferably between 1 and 12 mol%.

In a preferred embodiment, the fluoropolymer **P1** preferably has melt viscosity greater than 10 Pa.s, advantageously greater than 50 Pa.s, preferably greater than 100 Pa.s, more preferably greater than 500 Pa.s, more preferably of greater than 1000 Pa.s, according to the ASTM D-3835 method, measured at 232°C and 100 sec⁻¹.

Said fluoropolymer **P1** may comprise recurring units derived from a hydrophilic monomer **M1c** of formula R^{a}R^{b}C=C(R^{c})C(O)R^{d} in which the substituents R^{a}, R^{b} and R^{c} are independently from each other selected from the group consisting of H and C₁-C₅ alkyl; R^{d} is selected from the group consisting of -NHC(CH₃)₂CH₂C(O)CH₃ or -OR^{d'} with R^{d'} selected from the group consisting of H and C₁-C₁₈alkyl optionally substituted by one or more group(s)-OH, -CO₂H, -SO₃H, -PO₃H₂, -OC(O)R^{d"}, -C(O)O-R^{d"} or a five- or ten-linked heterocycle comprising at least one nitrogen atom in its cyclic chain; R^{d"} being selected from the group consisting of C₁-C₆alkyl or aryl C₆-C₁₂ optionally substituted by one or more group(s) -OH, -CO₂H, -SO₃H, -PO₃H₂. Said heterocycle can be saturated or unsaturated or aromatic. The said heterocycle can be monocyclic or bicyclic. Said heterocycle can be a pyrrole, pyrrolidine, pyridine, piperidine, pyrimidine, pyrazine, 1,4-dihydropyridine, indole, oxindole, isatine, quinoline, isoquinoline, quinazoline, imidazoline, pyrazolidine, 2-pyrrolidone, deltalactam, succinimide, 2-imidazolidinone, 4-imidazolidinone. The said heterocycle can be substituted by one or more C₁-C₅ groups alkyl. As mentioned above, C₁-C₁₈ alkyl is optionally substituted by the said heterocycle. The latter can be linked to the alkyl chain by the nitrogen atom or any other atom forming the heterocycle. Preferably the heterocycle is 2-pyrrolidone, delta-lactam, succinimide, 2-imidazolidinone, 4-imidazolidinone.

Said hydrophilic monomer **M1c** may be of the formula R^{a}R^{b}C=C(R^{c})C(O)R^{d} wherein R^{a}, R^{b} and R^{c} are independently from each other selected from the group consisting of H and C₁-C₅ alkyl; R^{d} is selected from the group consisting of -NHC(CH₃)₂CH₂C(O)CH₃ or -OR^{d'} with R^{d'} selected from the group consisting of H and C₄-C₁₈ alkyl optionally substituted by one or more group(s) -OH, -CO₂H, -SO₃H, - OC(O)R^{d"}, -C(O)O-R^{d"} or a five- or ten-linked heterocycle comprising at least one nitrogen atom in its cyclic chain; R^{d"} being selected from the group consisting of C₁-C₆ alkyl or C₆-C₁₂ aryl optionally substituted by one or more group(s) -OH, -CO₂H, -SO₃H. Preferably, the heterocycle is as defined above, especially the heterocycle is 2-pyrrolidone, deltalactam, succinimide, 2-imidazolidinone, 4-imidazolidinone. Preferably, the R^{d'} substituent is selected from the group consisting of H, methyl, ethyl, propyl, n-butyl, isobutyl, t-butyl, n-dodecyl, amyl, isoamyl, hexyl, 2-ethylhexyl, lauryl, n-octyl, hydroxyethyl, hydroxybutyl, hydroxypropyl, ethyl substituted by a ureido group. In particular, said hydrophilic monomer **M1c** is of formula R^{a}R^{b}C=C(R^{c})C(O)R^{d} wherein R^{a} and R^{b} are H; R^{c} is H or CH₃; R^{d} is -OR^{d'} with R^{d'} selected from the group consisting of H, methyl, ethyl, propyl, n-butyl, isobutyl, t-butyl, hydroxy ethyl, hydroxy propyl, hydroxy butyl, 2-pyrrolidone, deltalactam, succinimide, 2-imidazolidinone, 4-imidazolidinone. More specifically, said hydrophilic monomer **M1c** may be acrylic acid, methyl acrylate, ethyl acrylate, propyl acrylate, n-butyl acrylate, isobutyl acrylate, t-butyl acrylate, n-dodecyl acrylate, amyl acrylate, isoamyl acrylate, hexyl acrylate, 2-ethylhexyl acrylate, diacetone acrylamide, lauryl acrylate, n-octyl acrylate, hydroxypropyl methacrylate, hydroxybutyl methacrylate, hydroxyethyl methacrylate, hydroxyethyl acrylate, hydroxypropyl acrylate, hydroxybutyl acrylate, methacrylic acid, methyl methacrylate, ethyl methacrylate, propyl methacrylate, n-butyl methacrylate, isobutyl methacrylate, t-butyl methacrylate, n-dodecyl methacrylate, amyl methacrylate, isoamyl methacrylate, hexyl methacrylate, 2-ethylhexyl methacrylate, lauryl methacrylate, n-octyl methacrylate, ureido methacrylate, monomers with the formula CH₂=CH(CO₂CH₂CH₂CO₂H), CH₂=CH(CO₂CH₂CH₂-O-C(O)-CH₂CH₂CO₂H), CH₂=CH(CO₂CH₂CH₂CH₂-O-C(O)-CH₂CH₂CO₂H), CH₂=CH(CO₂CH(CH₃)CH₂-O-C(O)-CH₂CH₂CO₂H), CH₂=CH(CO₂CH₂CH₂-O-C(O)-C₆H₄CO₂H), CH₂=CH(CO₂CH₂CH₂CH₂CH(CO₂H)CH₂CH₂CO₂H); and mixtures thereof. Said fluoropolymer **P1** may comprise one or more recurring units derived from said hydrophilic monomer **M1c** as defined herein. In the fluoropolymer **P1,** said recurring units derived from said hydrophilic monomer **M1c** as defined herein may be present in a molar content of 0.05 to 10%, preferably 0.1 to 5% moles.

According to some embodiments, the fluoropolymer **P1** (homopolymer or copolymers) are made of biobased vinylidene fluoride. The term "biobased" means "resulting from biomass". This makes it possible to improve the ecological footprint of the membrane. Biobased vinylidene fluoride can be characterized by a content of renewable carbon, that is to say of carbon of natural origin and originating from a biomaterial or from biomass, of at least 1 atom%, as determined by the content of 14C according to Standard NF EN 16640. The term "renewable carbon" indicates that the carbon is of natural origin and originates from a biomaterial (or from biomass), as indicated below. According to some embodiments, the biocarbon content of the VDF can be greater than 5%, preferably greater than 10%, preferably greater than 25%, preferably greater than or equal to 33%, preferably greater than 50%, preferably greater than or equal to 66%, preferably greater than 75%, preferably greater than 90%, preferably greater than 95%, preferably greater than 98%, preferably greater than 99%, advantageously equal to 100%.

### Component P2

Said component is selected from the group consisting of hydrophobically-modified ethoxylated urethanes (HEUR). Unless otherwise indicated, the percentages expressed represent percentages by weight and are expressed with respect to the total weight of the reference element. For example, when it is indicated that a polymer comprises 10% of a monomer or of a reactant, it is understood that the polymer comprises 10% by weight of this monomer or reactant, with respect to the total weight of this polymer. The expression "at least one" designates one or more compound(s) (for example one or more polyethoxylated alcohol compound(s), one or more polyol(s), one or more polyisocyanate(s)), such as a mixture of from 2 to 5 compounds.

HEUR of the present invention result from the reaction between a reactant which confers the associativity and which consists of an end hydrophobic group, a compound of polyol (for example poly(alkylene glycol) type and a polyisocyanate. In the context of the present invention, the terms "reaction", "condensation" and "polycondensation" are used equivalently.

The polyurethane comprises, as constituent a), of at least one compound of formula (I) R-[(OE)ₘ-(OP)ₙ-(OB)ₚ]-OH wherein R is a saturated or unsaturated, linear or branched, or cyclic or aromatic carbon chain, containing from 5 to 70 carbon atoms; [(OE)ₘ-(OP)ₙ-(OB)ₚ] represents an alkoxyl chain formed from alternating or statistical alkoxyl units, distributed in blocks, chosen from ethoxyl units OE, propoxyl units OP and butoxyl units OB and m, n, p represent, independently of each other, 0 or an integer ranging between 1 and 100, the sum of m, n and p being between 0 and 100, or at least one compound of formula (II) R^{a}-OH wherein R^{a} is a saturated or unsaturated, linear or branched, or cyclic or aromatic carbon chain, containing from 3 to 70 carbon atoms.

Preferably, in the compound of formula (I) R-[(OE)ₘ-(OP)ₙ-(OB)ₚ]-OH, R is a saturated or unsaturated, linear or branched, or cyclic or aromatic carbon chain, containing from 5 to 65 carbon atoms, more preferably from 8 to 60 carbon atoms, particularly from 10 to 55.

Preferably, in the compound of formula (I) R-[(OE)ₘ-(OP)ₙ-(OB)ₚ]-OH, [(OE)ₘ-(OP)ₙ-(OB)ₚ] represents an alkoxyl chain formed from alternating or statistical alkoxyl units, distributed in blocks, chosen from ethoxyl units OE, propoxyl units OP and butoxyl units OB and m, n, p represent, independently of each other, 0 or an integer ranging between 1 and 100, the sum of m, n and p being between 0 and 100. More preferably, in the compound of formula (I) R-[(OE)ₘ-(OP)ₙ-(OB)ₚ]-OH, n and p are equal to 0 and m represents an integer ranging between 0 and 90, in particular between 0 and 80.

Furthermore, the polyurethane comprises, as constituent b), a poly(alkylene glycol). "Poly(alkylene glycol)" is understood to mean a polymer of an alkylene glycol derived from an olefin oxide. The poly(alkylene glycol) chains of the constituent b) according to the present invention include a proportion of ethyleneoxy groups, a proportion of propyleneoxy groups and/or a portion of butyleneoxy groups. The poly(alkylene glycol) chains according to the present invention can, for example, comprise a dominant proportion of ethyleneoxy groups in combination with a secondary proportion of propyleneoxy groups. Specific examples of alkylene glycol polymers comprise: poly(alkylene glycol)s with an average molecular weight of 1,000 g/mol, 4,000 g/mol, 6,000 g/mol and 10,000 g/mol; polyethylene-polypropylene glycols with a percentage of ethylene oxide of between 20 percent and 80 percent by weight and a percentage of propylene oxide of between 20 percent and 80 percent by weight.

According to one aspect of the present invention, the polyurethanes result from the condensation in particular of a poly(alkylene glycol) which is poly(ethylene glycol). It can, for example, be a poly(ethylene glycol), the molecular mass of which varies between 2,000 g/mol and 20,000 g/mol, for example between 8,000 g/mol and 15,000 g/mol (limits included). Mention may be made, by way of example, of poly(ethylene glycol) (or PEG) with a molecular mass varying between 10,000 g/mol and 12,000 g/mol (limits included).

Furthermore, the polyurethane comprises, as constituent c), at least one polyisocyanate. "Polyisocyanate" is understood to mean a compound which comprises at least 2 isocyanate -N-C-O functional groups.

According to one aspect of the present invention, the polyurethanes result from the condensation in particular of a polyisocyanate which is chosen in the group consisting of toluene diisocyanate, toluene diisocyanate dimers, toluene diisocyanate trimers, 1,4-butane diisocyanate, 1,6-hexane diisocyanate, isophorone diisocyanate, 1,3-cyclohexane diisocyanate, 1,4-cyclohexane diisocyanate, 4,4'-diisocyanatodicyclohexylmethane, 1-methyl-2,4-diisocyanatocyclohexane, diphenylmethylene diisocyanate (MDI), for example 2,2'-MDI, 2,4'-MDI, 4,4'-MDI or their mixtures, dibenzyl diisocyanate, a mixture of 1-methyl-2,4-diisocyanocyclohexane and 1-methyl-2,6-diisocyanatocyclohexane, hexamethylene diisocyanate biuret, hexamethylene diisocyanate biuret dimers, hexamethylene diisocyanate biuret trimers and a mixture of at least two of these compounds.

According to one aspect of the invention, said polyurethane results from the condensation of:
a) from 1% to 29% by weight of at least one compound of formula (I) and/or (II),
b) from 70% to 98% by weight of at least one poly(alkylene glycol) and
c) from 1% to 29% by weight of at least one polyisocyanate, the sum of these mass percentages being equal to 100%.

In a preferred embodiment, said component **P2** has a viscosity ranging from 500 to 30000 mPa.s, preferably ranging from 1000 to 30000 mPa.s, particularly ranging from 1500 to 25000 mPa.s measured by a Brookfield B-type viscometer at 25°C and 10 rpm.

### Process for producing a fluoropolymer or the composition according to the present invention

The composition according to the present invention can be prepared according to the process detailed below.

The process comprises the step i) of polymerizing a fluoromonomer in an aqueous medium to obtain a polymerization emulsion comprising said fluoropolymer.

The fluoromonomer can be selected from the group consisting of vinylidene fluoride, hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF₂=CFOCF₂CF(CF₃)OCF₂CF₂X wherein X is SO₂F, CO₂H, CH₂OH, CH₂OCN or CH₂OPO₃H; a monomer of formula CF₂=CFOCF₂CF₂SO₂F; a monomer of formula F(CF₂)nCH₂OCF=CF₂ wherein n is 1, 2, 3, 4 or 5; a monomer of formula R¹CH₂OCF=CF₂ wherein R' is hydrogen atom or F(CF₂)m and m is 1, 2, 3 or 4; a monomer of formula R²OCF=CH₂ wherein R² is F(CF₂)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluorométhyl-3,3,3-trifluoro-1-propene or mixture thereof.

Preferably to prepare said fluoropolymer **P1** of the present invention, said fluoromonomer is vinylidene fluoride or tetrafluoroethylene, optionally in mixture with at least one fluorinated monomer **M1b** selected from the group consisting of vinylidene fluoride hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF₂=CFOCF₂CF(CF₃)OCF₂CF₂X wherein X is SO₂F, CO₂H, CH₂OH, CH₂OCN or CH₂OPO₃H; a monomer of formula CF₂=CFOCF₂CF₂SO₂F; a monomer of formula F(CF₂)nCH₂OCF=CF₂ wherein n is 1, 2, 3, 4 or 5; a monomer of formula R¹CH₂OCF=CF₂ wherein R' is hydrogen atom or F(CF₂)m and m is 1, 2, 3 or 4; a monomer of formula R²OCF=CH₂ wherein R² is F(CF₂)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluorométhyl-3,3,3-trifluoro-1-propene or mixture thereof; said fluoromonomer being different from said fluorinated monomer **M1b.** More preferably, said fluorinated monomer **M1b** may be selected from the group consisting of vinylidene fluoride, tetrafluoroethylene, hexafluoropropylene, perfluoro(propylvinyl ether), perfluoro(methyl vinyl ether), perfluoro(ethylvinyl ether), trifluoroethylene, chlorofluoroethylene, chlorotrifluoroethylene and mixtures thereof. Depending on the recurring units contained in the fluoropolymer **P1** according to the invention, the monomer **M1b** to be added and content thereof is adapted accordingly. When the fluoropolymer **P1** according to the present invention contains recurring units issued from monomer **M1c** as defined above, the latter is preferably added during step i).

According to one embodiment, the fluoropolymer, preferably said fluoropolymer **P1,** is prepared by an emulsion polymerization process in the absence of a fluorinated surfactant. The surfactant may be non-ionic or ionic, preferably non-ionic. Preferably, the copolymer formed is fluorosurfactant-free, meaning that no fluoro-surfactants are used in making or processing the polymer. Preferably, the surfactant is a non-ionic surfactant. Hence, the surfactant is particularly non-ionic and non-fluorinated. Preferably, the surfactant comprises a polyethylene glycol segment and a polypropylene glycol segment. Preferably, said surfactant has a HLB value of 1 to 20, particularly a HLB value from 1 to 5 or from 10 to 15. In particular, the surfactant comprises a polyethylene glycol segment and a polypropylene glycol segment and has a HLB value of 1 to 5 and preferably a weight average molecular weight of from 2500 to 10000 g.mol-1, particularly from 5000 to 10000 g.mol-1 (measured by GPC calibrated with polystyrene standard). Alternatively, the surfactant comprises a polyethylene glycol segment and a polypropylene glycol segment, has a HLB value of 10 to 15 and preferably a weight average molecular weight of from 500 to 2500 g.mol-1 (measured by GPC calibrated with polystyrene standard). In the present application, the HLB value of the surfactant refers to an HLB value calculated by the Griffin's method. The surfactant charge may be from 10 ppm to 2% by weight on the total monomer weight used, preferably from 10 ppm to 1.5wt%, more preferably from 10 ppm to 1 wt% and most preferably the surfactant charge is from 100 ppm to 0.2% by weight on the total monomer weight used. Normally the surfactant is added during the initial filling of the reactor, but some portion may also be added after the reaction has begun. Surfactant may also be added as the reaction progresses if needed for further stabilization.

The step i) results in a latex generally having a solids content of from 10% to 60% by weight, preferably from 10% to 50%, and having a volume-average particle size of less than 1 micrometer, preferably less than 1000 nm, preferably of less than 800 nm and more preferably of less than 600 nm. The volume-average size of the particles is generally at least 20 nm, preferably at least 50 nm, and advantageously the average size is within the range from 100 to 400 nm. The polymer particles can form agglomerates, the volume-average size of which is from 1 to 30 micrometers and preferably from 2 to 10 micrometers. Nicomp CW380 Particle Size Analyzer (light scattering) is used to measure the volume average particle size of the latex particles. The agglomerates can break up into discrete particles during the formulation and the application to a substrate.

Step ii) of the processes of the present invention is a coagulation of the fluoropolymer obtained in step i). Said step ii) consists into the addition of said component **P2** as defined above in the present application to allow the fluoropolymer obtained in step i) to coagulate.

The fluoropolymer is coagulated by bringing the fluoropolymer into contact with said component **P2** as defined above. Step ii) of bringing the fluoropolymer into contact with said component **P2** is not limited, and examples thereof include adding a polymerization emulsion to said component **P2** or adding said polymer **P2** to the polymerization emulsion. The fluoropolymer and said component **P2** may be sufficiently brought into contact with each other by stirring a mixture containing the polymerization emulsion and said component **P2,** to thereby coagulate the fluoropolymer in the polymerization emulsion. The coagulation of the fluoropolymer may be performed in a batch manner or a continuous manner. Preferably, in step ii) said component **P2** is dropped or added to the polymerization emulsion comprising said fluoropolymer, preferably said fluoropolymer **P1** as defined above.

The mass content of said component **P2** used in step ii) preferably ranges from 0.0001wt% to 10wt%, more preferably from 0.001 to 8wt%, particularly from 0.01wt% to 5wt%, more particularly from 0.1 wt% to 5wt%, based on the total weight of said polymerization emulsion comprising said fluoropolymer **P1.**

Before carrying out step ii), the polymerization emulsion may be diluted with water. A temperature at which step ii) is carried out is preferably 1 to 70°C, more preferably 5°C or higher, further preferably 10°C or higher, and more preferably 50°C or lower, further preferably 40°C or lower, and particularly preferably 35°C or lower. A pH at which step ii) is carried out, is within a range of 3 to 10, more preferably 4 or higher, further preferably 5 or higher, and more preferably 9 or lower and further preferably 8 or lower. The pH can be adjusted by adding an acid or alkali to a polymerization dispersion. For example, when the pH of the polymerization dispersion is too low, an alkali such as ammonia can be added to the polymerization emulsion to regulate the polymerization emulsion for the pH within the above range. After coagulation, the fluoropolymer obtained in step ii) or the composition according to the present invention obtained in step ii) can be washed. Preferably, the fluoropolymer obtained in step ii) or the composition according to the present invention obtained in step ii) is dried at high temperature (200°C or less). The operational conditions to dry the fluoropolymer can be tuned to obtain the fluoropolymer according to the present invention, for example by drying at higher temperature or for a longer time or under reduced pressure.

Binder composition, Electrode-forming composition & electrode prepared therefrom.

In another aspect of the present invention, a binder is provided. Said binder comprises the composition according to the present invention, i.e. at least said fluoropolymer **P1** and component **P2** as defined in the present application.

In another aspect of the present invention an electrode-forming composition is provided. The electrode-forming composition is suitable for use in the preparation of electrodes for electrochemical devices. Preferably, the electrode-forming composition comprises at least one electrode active material, a binder composition according to the present invention, and optionally at least one conductive agent.

In a preferred embodiment, the electrode-forming composition has the following mass composition:
a. 50% to 99.95% electrode active material, preferably 50% to 99%,
b. 0% to 25% conductive agent, preferably 0.5% to 25%,
c. 0.05% to 25% of said binder depending on the invention, preferably 0.5% to 25%,
d. 0% to 25% of at least one additive selected from the group consisting of a plasticizer, an ionic liquid, a dispersing agent for a conductive additive, and a flow aid, preferably 0% to 5%;
the sum of all these percentages being 100%.

The conductive agents in the electrode are composed of one or more materials that can improve conductivity. Some examples include carbon blacks such as acetylene black, Ketjen black; carbon fibers, such as carbon nanotube, carbon nanofiber, vapor phase growth carbon fiber; metal powders such as SUS (steel use stainless) powder, or aluminum powder.

The electrode active materials in electrode compositions are materials that are capable of storing and releasing lithium ions.

In particular, for a negative electrode, that electrode active material is selected from the group consisting of a lithium alloy, lithium metal, a metal oxide, a carbon material such as graphite or hard carbon, silicon and its derivatives SiOx, silicone, graphite-silicon composite, a silicon alloy and Li₄Ti₅O₁₂ or a mixture thereof. The shape of the negative electrode active material is not particularly limited but is preferably particulate.

In particular, for a positive electrode, said electrode active material is selected from the group consisting of LiCoO₂, Li(Ni, Co, Al)O₂, Li₍₁₊ₓ₎NiₐMn_{b}Co_{c} (x represents a real number of 0 or more, a = 0.9, 0.8, 0.6, 0.5, or 1/3, b = 0.05, 0.1, 0.2, 0.3, or 1/3, c = 0.05, 0.1, 0.2, or 1/3), LiNiO₂, LiMn₂O₄, LiCoMnO₄, Li₃NiMn₃O₃, Li₃Fe₂(PO₄)₃, Li₃V₂(PO₄)₃, a spinel Li Mn substituted by a different element having a composition represented by Li₁₊ₓMn_{2-x-y}M_{y}O₄, M representing at least one metal chosen from Al, Mg, Co, Fe, Ni, and Zn, x and y independently representing a real number between 0 and 2, lithium titanate LiₓTiO_{y} -x and y independently representing a real number between 0 and 2, and a lithium metal phosphate having a composition represented by LiMPO₄, with M representing Fe, Mn, Co, or Ni. The shape of the positive electrode active material is not particularly limited but is preferably particulate. In addition, the surface of each of the materials described above can be coated. The coating material is not particularly limited as long as it has lithium-ion conductivity and contains a material that can be held in the form of a coating layer on the surface of the active material. Examples of the coating material include LiNbO₃, Li₄Ti₅O₁₂, and Li₃PO₄.

Preferably, the electrode-forming composition may further comprise sulfide-based solid inorganic particles. Said sulfide-based solid inorganic particles may be selected from the group consisting of:
- lithium sulfur tin phosphorous (« lsps ») such as Li₁₀SnP₂S₁₂ ;
- Lithium sulfur phosphorous (« lps ») of formula (Li₂S)x(P₂S₅)y, wherein x+ y=1 and 0≤ x ≤ 1, Li₇P₃S₁₁, Li₇PS₆, Li₄P₂S₆, Li_{9,6}P₃S₁₂ and Li₃PS₄;
- Doped LPS such as Li₂CuPS₄, Li₁₊₂ₓZn₁₋ₓPS₄, wherein 0 ≤ x ≤ 1, Li_{3.33}Mg_{0.33}P₂S₆, and Li₄₋₃ₓSCₓP₂S₆, wherein 0 ≤ x ≤ 1 ;
- Lithium sulfur phosphorous oxygen ("LPSO") of formula LiₓP_{y}S_{z}O, wherein 0,33 ≤ x ≤ 0,67, 0,07 s y ≤ 0,2, 0,4≤ z ≤ 0,55, 0 ≤ w ≤ 0,15 ;
- Lithium sulfur phosphorous ("LXPS") with x Si, Ge, Sn, As, Al, tel que Li₁₀GeP₂S₁₂ ou Li₁₀SiP₂S₁₂ ;
- Lithium sulfur phosphorous oxygen ("LXPSO") with x Si, Ge, Sn, As, Al;
- Lithium sulfur silica ("LSS") such as Li₂S-P₂S₅- SiS₂, Li₂S-P₂S₅-SiS₂-LiCl, Li₂S-SiS₂-P₂S₅, Li₂S-SiS₂-P₂S₅-LiI, Li_{9.54}Si_{1.74}P_{1.44}S_{11.7}Cl_{0.3} ;
- Li₄PS₄Cl, Li₁₅P₃S₁₆Cl₃, Li₇P₂S₈Cl et Li₇P₂S₈I ;
- Material of formula Li₆PS₅Y wherein Y is Cl, Br or I such as Li₆₋ₓPS₅₋ₓY₁₊ₓ, wherein 0 ≤ x ≤ 0,5 ; preferably Li₆PS₅Cl ; and mixture thereof.

Preferably, said sulfide-based solid inorganic particles may be material of formula Li₆PS₅Y wherein Y is Cl, Br or I such as Li₆₋ₓPS₅₋ₓY₁₊ₓ, wherein 0≤ x ≤ 0,5 ; preferably Li₆PS₅Cl.

Preferably, the electrode-forming composition may further comprise a solvent. The solvent may be used to disperse all the components for the preparation of the electrode made thereof.

When the composition comprises sulfide-based solid inorganic particles, the solvent may be, for example, without limitation: octyl acetate, pentyl acetate, acetone, methyl isobutyl ketone (MIBK), diisobutyl ketone, cyclopentanone, isobutyl isobutyrate (IBIB), ethyl acetate, propylene glycol monomethyl ether acetate, 1,3,2-dioxathiolan-2-oxide, 1,2-dimethoxyethane, 1,3,3-trimethyl-2-oxabicyclo[2.2.2]octane, 1,3-dimethyl-2-imidazolidinone, , 1,3-dioxolan-2-one, 1,3-dioxolane, 2,2,2-trifluoro-N,N-dimethylacetamide, 2,2,4,4-tetramethyl-3-pentanone, 2,2,4- trimethylpentan-3-one, 2,2,5,5-tetramethylhexan-3-one, 2,2,6,6-tetramethyl-4-heptanone, 2,2-dimethylpentan-3-one, 2,3-butanedione, 2,4-dimethyl-3-pentanone, 2,6-dimethyl-4-heptanone, 2-butanone, 2-methylpentan-3-one, 2-methylpropanenitrile, 2-methyltetrahydrofuran, 2-pentanone, 2-phenylacetonitrile, 3,3-dimethyl-2-butanone, 3-methyl-2-butanone, 3-pentanone, 4-methyl-2-oxo-1,3-dioxolane, 4-methyl-2-pentanone, acétonitrile, acetophenone, benzaldehyde, benzonitrile, benzophenone, bis(2-chloroethyl) ether, butanenitrile, butyl acetate, chloroacetonitrile, cyclohexanone, cyclopentanone, dibenzyl ether, dibutyl ether, diethyl carbonate, diethyl ether, diisopropyl ether, dimethyl carbonate, dimethylcyanamide, dioxane, diphenylphosphinic chloride, dipropyl ether, ethyl 2,2-dimethylpropanoate, ethyl 2-methylpropanoate, ethyl acetate, ethyl benzoate, ethyl butanoate, ethyl chloroacetate, ethyl chloroformate, ethyl formate, ethyl propanoate, formamide, isopropyl 2,2-dimethylpropanoate, isopropyl acetate, isopropyl pivalate, methyl 2,2-dimethylpropanoate, methyl acetate, methyl benzoate, methyl propanoate, methyl propyl ether, N,N-dimethylbenzylamine, N,N-dimethylcarbamoyl chloride, N,N-dimethylformamide, N,N-dimethyltrifluoroacetamide, N,N-dimethylurethane, N-methylpyrrolidone, oxane, oxolan-2-one, phenylphosphonic dichloride, phenylphosphonic difluoride, phosphorus oxychloride, propanenitrile, propyle acétate, sulfolane, tétrahydrofurane, tributyle phosphate, triethyl phosphate, trimethyle phosphate, tripyrrolidinophosphine oxide, 1-butyl-3-methylimidazolium tetrafluoroborate, 1-butyl-3-methylimidazolium bis-(trifluoromethylsulfonyl)imide, butyl-methylpyrrolidinium bis-(trifluoromethylsulfonyl)imide, butyl-methylpiperidinium bis-(trifluoromethylsulfonyl)imide, ethyl-dimethyl-propylammonium bis-(trifluoromethylsulfonyl)imide, triethylsulfonium bis-(trifluoromethylsulfonyl) imide.

The electrode can be prepared by a process comprising the following steps:
A) providing an electrode-forming composition comprising the binder composition according to the present invention; at least one electrode active material and a solvent and optionally, at least one electrically conductive additive;
B) providing a metallic substrate with at least one surface;
C) Applying the electrode-forming composition provided in step a) to said at least one surface of the metallic substrate provided in step B), thereby providing an assembly comprising a metal substrate coated with said electrode-forming composition on at least one surface; and
D) drying of the assembly provided for in step C) to form the electrode.

### Solid electrolyte

In another aspect of the present invention, a solid electrolyte is provided. The solid electrolyte comprises the binder composition according to the present invention and sulfide-based inorganic particles and optionally a lithium salt.

The lithium salt may be selected from the group consisting of LiCF₃SO₃, LiPF₆, LiClO₄, LiBF₄, LiB(C₂O₄)₂, LiN(SO₂F)₂, LiN(SO₂CF₃)₂, LiN(SO₂C₂F₃)₂, LiN(SO₂C₂F₃)₂, LiN(SO₂F)(SO₂CF₃), LiN(SO₂F)(SO₂C₂F₃), LiN(SO₂CF₃)(SO₂C₂F₅),LiAsF₆, LiBF₂C₂O₄, LiNO₃, LiPF₃(CF₂CF₃)₃, LiTDI or mixture thereof. Preferably, the lithium salt may be selected from the group consisting of LiCF₃SO₃, LiPF₆, LiClO₄, LiBF₄, LiB(C₂O₄)₂, LiN(SO₂F)₂, LiN(SO₂CF₃)₂, LiN(SO₂C₂F₃)₂, LiN(SO₂C₂F₅)₂, LiTDI or mixture thereof. In particular, the lithium salt may be selected from the group consisting of LiCF₃SO₃, LiPF₆, LiClO₄, LiBF₄, LiN(SO₂F)₂, LiN(SO₂CF₃)₂, LiN(SO₂C₂F₃)₂, LiTDI or mixture thereof.

The solid electrolyte may also sulfide-based inorganic particles. The latter may be selected from the group consisting of:
- lithium sulfur tin phosphorous (« lsps ») such as Li₁₀SnP₂S₁₂ ;
- Lithium sulfur phosphorous (« lps ») of formula (Li₂S)x(P₂S₅)y, wherein x+ y=1 and 0≤ x ≤ 1, Li₇P₃S₁₁, Li₇PS₆, Li₄P₂S₆, Li_{9,6}P₃S₁₂ and Li₃PS₄;
- Doped LPS such as Li₂CuPS₄, Li₁₊₂ₓZn₁₋ₓPS₄, wherein 0 ≤ x ≤ 1, Li_{3.33}Mg_{0.33}P₂S₆, and Li₄₋₃ₓScₓP₂S₆, wherein 0 ≤ x ≤ 1 ;
- Lithium sulfur phosphorous oxygen ("LPSO") of formula LiₓP_{y}S_{z}O, wherein 0,33 ≤ x ≤ 0,67, 0,07 s y ≤ 0,2, 0,4≤ z ≤ 0,55, 0≤ w ≤ 0,15 ;
- Lithium sulfur phosphorous ("LXPS") with x Si, Ge, Sn, As, Al, tel que Li₁₀GeP₂S₁₂ ou Li₁₀SiP₂S₁₂ ;
- Lithium sulfur phosphorous oxygen ("LXPSO") with x Si, Ge, Sn, As, Al;
- Lithium sulfur silica ("LSS") such as Li₂S-P₂S₅- SiS₂, Li₂S-P₂S₅-SiS₂-LiCl, Li₂S-SiS₂-P₂S₅, Li₂S-SiS₂-P₂S₅-LiI, Li_{9.54}Si_{1.74}P_{1.44}S_{11.7}Cl_{0.3} ;
- Li₄PS₄Cl, Li₁₅P₃S₁₆Cl₃, Li₇P₂S₈Cl et Li₇P₂S₈I ;
- Material of formula Li₆PS₅Y wherein Y is Cl, Br or I such as Li₆₋ₓPS₅₋ₓY₁₊ₓ, wherein 0 ≤ x ≤ 0,5 ; preferably Li₆PS₅Cl ;
And mixture thereof.

The solid electrolyte may be in the form of a film. The film can be prepared following a process comprising the steps of:
a) dissolving the binder composition in an organic solvent to form a solution,
b) adding said sulfide-based inorganic particles and optionally a lithium salt to form a composition,
c) coating the composition formed in step b) on a support to form a film,
d) drying the film so obtained.

The organic solvent may be, without limitation, octyl acetate, pentyl acetate, acetone, methyl isobutyl ketone (MIBK), diisobutyl ketone, cyclopentanone, isobutyl isobutyrate (IBIB), ethyl acetate, propylene glycol monomethyl ether acetate, 1,3,2-dioxathiolan-2-oxide, 1,2-dimethoxyethane, 1,3,3-trimethyl-2-oxabicyclo[2.2.2]octane, 1,3-dimethyl-2-imidazolidinone, , 1,3-dioxolan-2-one, 1,3-dioxolane, 2,2,2-trifluoro-N,N-dimethylacetamide, 2,2,4,4-tetramethyl-3-pentanone, 2,2,4-trimethylpentan-3-one, 2,2,5,5-tetramethylhexan-3-one, 2,2,6,6-tetramethyl-4-heptanone, 2,2-dimethylpentan-3-one, 2,3-butanedione, 2,4-dimethyl-3-pentanone, 2,6-dimethyl-4-heptanone, 2-butanone, 2-methylpentan-3-one, 2-methylpropanenitrile, 2-methyltetrahydrofuran, 2-pentanone, 2-phenylacetonitrile, 3,3-dimethyl-2-butanone, 3-methyl-2-butanone, 3-pentanone, 4-methyl-2-oxo-1,3-dioxolane, 4-methyl-2-pentanone, acétonitrile, acetophenone, benzaldehyde, benzonitrile, benzophenone, bis(2-chloroethyl) ether, butanenitrile, butyl acetate, chloroacetonitrile, cyclohexanone, cyclopentanone, dibenzyl ether, dibutyl ether, diethyl carbonate, diethyl ether, diisopropyl ether, dimethyl carbonate, dimethylcyanamide, dioxane, diphenylphosphinic chloride, dipropyl ether, ethyl 2,2-dimethylpropanoate, ethyl 2-methylpropanoate, ethyl acetate, ethyl benzoate, ethyl butanoate, ethyl chloroacetate, ethyl chloroformate, ethyl formate, ethyl propanoate, formamide, isopropyl 2,2-dimethylpropanoate, isopropyl acetate, isopropyl pivalate, methyl 2,2-dimethylpropanoate, methyl acetate, methyl benzoate, methyl propanoate, methyl propyl ether, N,N-dimethylbenzylamine, N,N-dimethylcarbamoyl chloride, N,N-dimethylformamide, N,N-dimethyltrifluoroacetamide, N,N-dimethylurethane, N-methylpyrrolidone, oxane, oxolan-2-one, phenylphosphonic dichloride, phenylphosphonic difluoride, phosphorus oxychloride, propanenitrile, propyle acétate, sulfolane, tétrahydrofurane, tributyle phosphate, triethyl phosphate, trimethyle phosphate, tripyrrolidinophosphine oxide, 1-butyl-3-methylimidazolium tetrafluoroborate, 1-butyl-3-methylimidazolium bis-(trifluoromethylsulfonyl)imide, butyl-methylpyrrolidinium bis-(trifluoromethylsulfonyl)imide, butyl-methylpiperidinium bis-(trifluoromethylsulfonyl)imide, ethyl-dimethyl-propylammonium bis-(trifluoromethylsulfonyl)imide, triethylsulfonium bis-(trifluoromethylsulfonyl) imide.

Preferably, said solution formed in step a) may have a solution viscosity greater than 80 cP, advantageusouly greater than 90 cP, preferably greater than 95 cP, in particular greater than 100 cP measured at 25°C at a shear rate of 10 sec⁻¹. According to a preferred embodiment, said solution has a viscosity of less than 600 cP, advantageously less than 550 cP, preferably less than 500 cP, in particular less than 450 cP measured at 25°C and a shear rate of 10 sec⁻¹.

A solution viscosity greater than 80 cP may be preferred to allow good suspension of the sulfide-based inorganic particles.

Preferably, step a) is performed at a temperature of from 20°C to 80°C, preferably of from 20°C to 70°C.

The support can be removed after the drying stage to obtain a self-supporting film. The support may be, for example, mylar, glass, aluminum, or aluminum coated with a polymer layer.

Alternatively, the support can be a fibrous reinforcement. When the support is a fibrous reinforcement, it is not removed. According to a particular embodiment, the fibrous reinforcement is made of any material (porous membrane, woven or non-woven) that improves the mechanical properties compared to the composition alone. This may include, but is not limited to:
- a microporous film based on polyolefins, such as polyethylene (PE), polyethylene terephthalate (PET), polypropylene (PP), Celgard^{®} Li-ion separator,
- a porous film based on PVDF, polyethersulfone (PES) or polysulfone (PSU),
- a woven substrate (e.g. PP, PE, PET, PVDF, PES, PSU, inorganic fibers),
- a non-woven substrate of the melt blown type (e.g. PP, PET, PVDF, PES, PSU), a spunbond substrate (e.g. PP, PET, PVDF, PES, PSU),
- a cellulosic separator,
- staples short fibers, or
- of fibers spun in a molten state.
- a metal (copper or aluminum)

According to one embodiment, the fibrous reinforcement is a multilayer material with at least one layer of polyolefin and at least one inorganic layer, e.g. Celgard^{®} PP coated with an alumina layer on both sides. Fibrous reinforcement can be selected from polymers (e.g. polyolefin, PVDF, PTFE, polyamide, polyimide, polyaramid, polybenzoaxoles, polybenzimidazoles, polybenzthiazoles, polyphosphazenes, PEKK, PEEK, PES, PSU), carbon fibers (e.g. vapor grown carbon fibers (VGCF^{®})), carbon nanotubes (CNTs), inorganic fibers (e.g. glass fibers), and plant fibers (e.g. paper, lignin, cellulose, cellulose nanowhiskers).

### Separator

The composition according to the present invention can be used as one of the materials used for the preparation of a separator in an electrochemical device. The electrochemical device is selected from the group: Li-ion secondary battery, capacitor, double layer electric capacitor, and membrane electrode assembly (AME) for fuel cell, preferably Li-ion secondary battery. Said composition is preferably used as one of the components of the separator of a secondary battery, preferably secondary Li-ion battery. Preferably, said composition of the present invention is used as a coating in the separator.

The separator may therefore contain a porous support onto which a coating L1 comprising said composition according to the present invention is applied.

There is no particular limitation in the choice of the support as long as it is a porous substrate having pores. The porous support can take the form of a membrane or fibrous tissue. When the porous support is fibrous, it may be a non-woven veil forming a porous veil, such as a veil obtained by direct spinning or melt-blowing (type "spunbond" or "melt blown") or electro-spinning. Examples of porous support useful in the invention as a carrier include, but are not limited to: polyolefins, polyethylene terephthalate, polybutylene terephthalate, polyester, polyacetal, polyamide, polycarbonate, polyimide, polyetheretherketone, polyether sulfone, poly(phenylene oxide), poly(phenylene sulfide), polyethylene naphthalene or mixtures thereof. However, other heat-resistant engineering plastics can be used without any particular limitation. Non-woven materials made of natural and synthetic materials can also be used as a substrate for the separator. The porous support is generally 1 to 50 µm thick and is typically membrane obtained by extrusion and drawing (wet or dry processes) or nonwoven castings. The porous support preferably has a porosity between 5% and 95%. The average pore size (diameter) is preferably between 0.001 and 50 microns, preferably between 0.01 and 10 microns.

The coating L1 may further contain inorganic particles that serve to form micropores (the gaps between inorganic particles). The addition of inorganic particles can also contribute to heat resistance or improve wettability. According to one embodiment, said coating comprises from 30 to 99 wt% of inorganic particles, relative to the weight of the coating. These inorganic particles must be electrochemically stable (not subject to oxidation and/or reduction in the range of voltages used). In addition, powdery inorganic materials preferably have high ionic conductivity. Low-density materials are preferred over higher-density materials, as the weight of the battery produced can be reduced. The dielectric constant is preferably equal to or greater than 5. According to one embodiment, said inorganic particles are selected from the group consisting of: BaTiO₃, Pb(Zr,Ti)O₃, Pb₁₋ₓLaₓZr_{y}O₃ (0<x<1, 0<y<1), PbMg₃Nb_{2/3}O₃, PbTiO₃, HfO, HfO₂, SrTiO₃, SnO₂, CeO₂, MgO, NiO, CaO, ZnO, Y₂O₃, bohemite (y-AlO (OH)), Al₂O₃, TiO₂, SiC, ZrO₂, boron silicate, BaSO₄, nanoclays, or mixtures thereof. Preferably said coating may comprise from 0.5 to 40wt% of the binder and from 60 to 99.5wt% of inorganic particles.

The coating L1 may have a thickness of less than 5 µm, advantageously of less than 4.5 µm, preferably less than 4.0 µm, more preferably of less than 3.5 µm, most preferably less than 3.0 µm, in particular less than 2.5 µm, more particularly less than 2.0 µm, most particularly less than 1.5 µm. Preferably, the whole separator may have a thickness of less than 55 µm, advantageously of less than 50 µm, preferably less than 45 µm, more preferably of less than 40 µm, most preferably less than 30 µm, in particular less than 20 µm, more particularly less than 15 µm, most particularly less than 10 µm.

The coating used to prepare the coating **L1** may optionally comprise from 0.1 to 10wt%, of additives, selected from thickeners, pH adjusting agents, anti-sedimentation agents, surfactants, wetting agents, fillers, anti-foaming agents and promoters of fugitive adhesion or not. The fillers mentioned here in the additives are different from the inorganic particles mentioned above.

Alternatively, the separator comprises a base layer **L1'** and a top layer **L2';** wherein the base layer **L1'** comprises a porous support onto which a binder is applied and optionally inorganic particles and wherein the top layer **L2'** comprises said composition according to the present invention. During the production of a battery, the separator and the electrode are placed on top of each other, and pressure is applied to the assembly to allow the two elements to stick together. The top layer **L2'** improves the adhesion of the base layer **L1'** in order to maintain an adequate cohesion between the separator and the electrode (either cathode or anode).

The base layer **L1'** comprises a porous support onto which a binder and optionally inorganic particles is applied. There is no particular limitation in the choice of the support as long as it is a porous substrate having pores. The porous support can take the form of a membrane or fibrous tissue. When the porous support is fibrous, it may be a non-woven veil forming a porous veil, such as a veil obtained by direct spinning or melt-blowing (type "spunbond" or "melt blown") or electro-spinning. Examples of porous support useful in the invention as a carrier include, but are not limited to: polyolefins, polyethylene terephthalate, polybutylene terephthalate, polyester, polyacetal, polyamide, polycarbonate, polyimide, polyetheretherketone, polyether sulfone, poly(phenylene oxide), poly(phenylene sulfide), polyethylene naphthalene or mixtures thereof. However, other heat-resistant engineering plastics can be used without any particular limitation. Non-woven materials made of natural and synthetic materials can also be used as a substrate for the separator. The porous support is generally 1 to 50 µm thick and is typically membrane obtained by extrusion and drawing (wet or dry processes) or nonwoven castings. The porous support preferably has a porosity between 5% and 95%. The average pore size (diameter) is preferably between 0.001 and 50 microns, preferably between 0.01 and 10 microns. The binder can be based on fluoropolymers such polyvinylidene fluoride, polyacrylamide, polyacrylonitrile, ABS or SBR polymers, copolymer of vinylidene fluoride and hexafluoropropene and/or acrylic-based polymers as defined in the present application.

The top layer **L2'** may have a thickness of less than 5 µm, advantageously of less than 4.5 µm, preferably less than 4.0 µm, more preferably of less than 3.5 µm, most preferably less than 3.0 µm, in particular less than 2.5 µm, more particularly less than 2.0 µm, most particularly less than 1.5 µm.

### Examples

### Example 1

A latex of a vinylidene-hexafluoropropene (VDF-HFP) copolymer with monomer ratio of VDF/HFP of 67/33 wt% was prepared by known emulsion polymerization method. 8 ml of the latex was taken in a glass bottle and 3 drops of a coagulant HEUR (wherein component of formula (I) m=n=p=0 and R is a linear carbon chain containing 12 carbon atoms) was added. The container was shaken and visually checked for coagulation.

### Example 2

The same process as in example 1 was taken except another coagulant HEUR (wherein component of formula (I) m=4 ; n=p=0 and R is an aromatic carbon chain containing 21 carbon atoms) was used.

### Example 3

The same process as in example 1 was taken except another coagulant HEUR (wherein component of formula (I) m=3 ; n=p=0 and R is an aromatic carbon chain containing 30 carbon atoms) was used.

### Example 4

The same process as in example 1 was taken except another coagulant HEUR (wherein component of formula (I) m=60 ; n=p=0 and R is an aromatic carbon chain containing 30 carbon atoms) was used.

### Example 5

The same process as in example 1 was taken except Acrysol RM-8 was used as coagulant.

### Example 6

The same process as in example 1 was taken except a latex of a vinylidene-hexafluoropropene (VDF-HFP) copolymer with monomer ratio of VDF/HFP of 75/25 wt% was used.

### Comparative example 1

The same process as in example 1 was taken except a liquid acrylic self-associative thickener (ASE) was used as coagulant.

The results are detailed in table 1 below.

**[Table 1]**

| Examples | Fluoropolymer latex | Type | Coagulation |
|---|---|---|---|
| Example 1 | VDF-HFP = 67/33wt% | HEUR | Yes |
| Example 2 | VDF-HFP = 67/33wt% | HEUR | Yes |
| Example 3 | VDF-HFP = 67/33wt% | HEUR | Yes |
| Example 4 | VDF-HFP = 67/33wt% | HEUR | Yes |
| Example 5 | VDF-HFP = 67/33wt% | HEUR | Yes |
| Example 6 | VDF-HFP = 75/25wt% | HEUR | Yes |
| Comparative example 1 | VDF-H FP = 67/33 wt% | ASE | No |

As demonstrated with the present data, hydrophobically modified ethoxylate urethanes allow the coagulation of a fluoropolymer.

## Claims

1. Composition comprising a fluoropolymer **P1** comprising recurring units derived from a monomer **M1a** selected from the group consisting of vinylidene fluoride or tetrafluoroethylene wherein said composition further comprises from 0.0001wt% to 5wt%, based on the weight of said fluoropolymer **P1** in the composition, of a component **P2** selected from the group consisting of hydrophobically-modified ethoxylate urethanes (HEUR).

2. Composition according to the previous claim wherein said component **P2** resulting from the condensation:
A) of at least one compound of formula (I) R-[(OE)ₘ-(OP)ₙ-(OB)ₚ]-OH wherein R is a saturated or unsaturated, linear or branched or cyclic or aromatic carbon chain, containing from 5 to 70 carbon atoms; [(OE)ₘ-(OP)ₙ-(OB)ₚ] represents an alkoxyl chain formed from alternating or statistical alkoxyl units, distributed in blocks, chosen from ethoxyl units OE, propoxyl units OP and butoxyl units OB and m, n, p represent, independently of each other, 0 or an integer ranging between 1 and 100, the sum of m, n and p being between 0 and 100,
or at least one compound of formula (II) R^{a}-OH wherein R^{a} is a saturated or unsaturated, linear or branched, or cyclic or aromatic carbon chain, containing from 3 to 70 carbon atoms;
B) of at least one polyol, preferably of at least one poly(alkylene glycol) and
C) of at least one polyisocyanate.

3. Composition according to any of the previous claims wherein said component **P2** has a viscosity ranging from 500 to 30000 mPa.s measured by a Brookfield B-type viscometer at 25°C and 10 rpm.

4. Composition according to any of the previous claims wherein said fluoropolymer **P1** is a homopolymer of vinylidene fluoride, a homopolymer of tetrafluoroethylene or a polymer comprising recurring units derived from a monomer **M1a** selected from the group consisting of vinylidene fluoride and tetrafluoroethylene and recurring units derived from at least one fluorinated monomer **M1b;** said at least one fluorinated monomer **M1b** being selected from the group consisting of hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF₂=CFOCF₂CF(CF₃)OCF₂CF₂X wherein X is SO₂F, CO₂H, CH₂OH, CH₂OCN or CH₂OPO₃H; a monomer of formula CF₂=CFOCF₂CF₂SO₂F; a monomer of formula F(CF₂)nCH₂OCF=CF₂ wherein n is 1, 2, 3, 4 or 5; a monomer of formula R¹CH₂OCF=CF₂ wherein R' is hydrogen atom or F(CF₂)m and m is 1, 2, 3 or 4; a monomer of formula R²OCF=CH₂ wherein R² is F(CF₂)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluorométhyl-3,3,3-trifluoro-1-propene or mixture thereof; said monomer **M1b** being different from monomer **M1a.**

5. Composition according to the previous claim wherein said fluoropolymer **P1** is a copolymer comprising recurring units derived from a monomer **M1a** being vinylidene fluoride and from 1wt% to 40wt% of recurring units derived from at least one fluorinated monomer **M1b** as defined in the present invention based on the total weight of said fluoropolymer **P1,** preferably said at least one fluorinated monomer **M1b** is hexafluoropropene.

6. Binder composition comprising the composition according to any one of the previous claims.

7. An electrode-forming composition for use in the preparation of electrodes for electrochemical devices comprising at least one electrode active material, a binder composition according to the previous claim, and optionally at least one conductive agent.

8. An electrode-forming composition according to the previous claim wherein said electrode active material is selected from the group consisting of LiCoO₂, Li(Ni, Co, Al)O₂, Li_{(1+ x)}NiₐMn_{b}Co_{c} (x represents a real number of 0 or more, a = 0.9, 0.8, 0.6, 0.5, or 1/3, b = 0.05, 0.1, 0.2, 0.3, or 1/3, c = 0.05, 0.1, 0.2, or 1/3), LiNiO₂, LiMn₂O₄, LiCoMnO₄, Li₃NiMn₃O₃, Li₃Fe₂(PO₄)₃, Li₃V₂(PO₄)₃, a spinel Li Mn substituted by a different element having a composition represented by Li₁₊ₓMn_{2-x-y}M_{y}O₄, M representing at least one metal chosen from Al, Mg, Co, Fe, Ni, and Zn, x and y independently representing a real number between 0 and 2, lithium titanate LiₓTiO_{y} - x and y independently representing a real number between 0 and 2, and a lithium metal phosphate having a composition represented by LiMPO₄, with M representing Fe, Mn, Co, or Ni.

9. An electrode-forming composition according to the previous claim 6 wherein said electrode active material is selected from the group consisting of lithium alloy, lithium metal, a metal oxide, a carbon material such as graphite or hard carbon, silicon and its derivatives SiOx, silicone, graphite-silicon composite, a silicon alloy and Li₄Ti₅O₁₂ or a mixture thereof.

10. An electrode for electrochemical devices comprising at least one electrode active material, a binder composition according to claim 5, and optionally at least one conductive agent.

11. A secondary battery comprising an electrode according to the previous claim.

12. A solid electrolyte comprising the binder composition according to claim 5 and a lithium salt and/or sulfide-based inorganic particles.

13. A solid-state battery comprising a solid electrolyte according to the previous claim and/or an electrode according to previous claim 7.

14. Use, as coagulant in the process for preparing a fluoropolymer, of a component **P2** selected from the group consisting of hydrophobically-modified ethoxylate urethanes (HEUR).

15. A process for preparing the composition according to claims 1 to 4 comprising the steps of:
i) Polymerizing vinylidene fluoride, optionally in mixture with at least one fluorinated monomer **M1** selected from the group consisting of hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF₂=CFOCF₂CF(CF₃)OCF₂CF₂X wherein X is SO₂F, CO₂H, CH₂OH, CH₂OCN or CH₂OPO₃H; a monomer of formula CF₂=CFOCF₂CF₂SO₂F; a monomer of formula F(CF₂)nCH₂OCF=CF₂ wherein n is 1, 2, 3, 4 or 5; a monomer of formula R¹CH₂OCF=CF₂ wherein R' is hydrogen atom or F(CF₂)m and m is 1, 2, 3 or 4; a monomer of formula R²OCF=CH₂ wherein R² is F(CF₂)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluorométhyl-3,3,3-trifluoro-1-propene or mixture thereof, in an aqueous medium to obtain a polymerization emulsion comprising said fluoropolymer **P1;**
ii) Bringing said fluoropolymer **P1** in the polymerization emulsion into contact with of a component **P2** selected from the group consisting of hydrophobically-modified ethoxylate urethanes (HEUR).

16. A process for preparing a fluoropolymer comprising the steps of:
i) Polymerizing a fluoromonomer, preferably is vinylidene fluoride optionally in mixture with at least one fluorinated monomer **M1** selected from the group consisting of hexafluoropropene, tetrafluoroethylene, chlorotrifluoroethylene, vinyl fluoride, pentafluoropropene, tetrafluoropropene, trifluoroethylene, 1,2-difluoroethylene and perfluoroalkyle vinyl ethers, perfluoro(1,3-dioxole), perfluoro(2,2-dimethyl-1,3-dioxole) (PDD), a monomer of formula CF₂=CFOCF₂CF(CF₃)OCF₂CF₂X wherein X is SO₂F, CO₂H, CH₂OH, CH₂OCN or CH₂OPO₃H; a monomer of formula CF₂=CFOCF₂CF₂SO₂F; a monomer of formula F(CF₂)nCH₂OCF=CF₂ wherein n is 1, 2, 3, 4 or 5; a monomer of formula R¹CH₂OCF=CF₂ wherein R' is hydrogen atom or F(CF₂)m and m is 1, 2, 3 or 4; a monomer of formula R²OCF=CH₂ wherein R² is F(CF₂)p et p is 1, 2, 3 or 4; perfluorobutylethylene (PFBE); trifluoropropene, hexafluoroisobutylene, perfluorobutylethylene, bromotrifluoroethylene, chlorofluoroethylene, chlorotrifluoropropene and 2-trifluorométhyl-3,3,3-trifluoro-1-propene or mixture thereof, in an aqueous medium to obtain a polymerization emulsion comprising a fluoropolymer, and
ii) Bringing the fluoropolymer in the polymerization emulsion into contact with of a component **P2** selected from the group consisting of hydrophobically-modified ethoxylate urethanes (HEUR).

17. Use of the composition according to any one of the previous claims 1 to 4 in the preparation of a conductive polymer, solid electrolytes, electrodes, separator for electrochemical devices, paints, cables, wires, anti-corrosion equipment for the chemical industry, coatings for construction or architecture.

18. Coating for separator of a secondary battery comprising the composition according to any one of the previous claims 1 to 4.

19. Separator for secondary battery comprising the coating according to the previous claim.
